Europäisches Patentamt

European Patent Office

Office européen des brevets

(19)

(11) **EP 1 447 260 A1**

(12) **EUROPEAN PATENT APPLICATION**

(43) Date of publication:
**18.08.2004 Bulletin 2004/34**

(51) Int Cl.⁷: **B60K 41/12**, B60K 31/04,
F16H 61/46, F16H 47/02

(21) Application number: **04002723.7**

(22) Date of filing: **06.02.2004**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **13.02.2003 DE 10305871**

(71) Applicant: **AGCO GmbH & Co.**
**87616 Marktoberdorf (DE)**

(72) Inventors:
• **Dittrich, Thomas**
  **87671 Ronsberg (DE)**
• **Ammann, Josef**
  **87675 Stotten (DE)**

(74) Representative: **Morrall, Roger**
  **AGCO Limited,**
  **P.O. Box 62,**
  **Banner Lane**
  **Coventry CV4 9GF (GB)**

(54) **Method for controlling the drive of a vehicle**

(57)     A method of controlling a drive of a vehicle during both acceleration phase and constant ground speed phase of operation is disclosed. The drive includes an engine (1) controlled by an electronic control unit (6), the engine driving an infinitely variable change-speed gear (2). The method includes setting a desired ground speed of the vehicle and repeating a cycle of steps a), b) and c) in both phases of operation. These steps are as follows:-

a) determining any change in the torque % level (actual torque/maximum torque) of the engine.
b) calculating a theoretical engine speed in response to the change in torque % level and the actual speed of the engine caused by the change in torque % level, said theoretical engine speed being determined with the aid of a speed dependant performance parameter characteristic of the engine (e. g. fuel consumption) stored in the control unit which defines a desired operating range of said performance parameter, to bring the engine operation back into said desired operating range of the parameter, adjusting the engine speed to the theoretical speed, and
c) calculating and adjusting the gear ratio of the change-speed gear dependant on the theoretical engine speed of step b) to maintain the desired ground speed of the vehicle.

The first step of the cycle may be step a) or c) depending on the phase of operation of the vehicle. The method enables a quick response to change in engine load in utility vehicles of all kinds such as tractors.

Fig. 1

EP 1 447 260 A1

**Description**

The invention relates to a method for controlling a drive of a vehicle whilst in a phase of acceleration and also whilst in a phase of constant ground speed operation. The drive includes and electronically controlled engine driving an infinitely variable change-speed gear. During the phase of constant ground speed a desired or theoretical ground speed is preset.

Several methods for controlling a drive of a vehicle are known, all of which having the disadvantage that increments of load, for example when driving an ascending slope, are recognised and taken into account too late. Generally, in such a case the control unit responds to a decrease of ground speed in a manner so as to try to maintain the desired or theoretical ground speed by changing the ratio of the gear. However, the number of revolutions of the driving engine is reduced. Action is taken only by increasing the number of revolutions and the power of the engine if the decrease of ground speed is higher than an acceptable limit. At that time the number of revolutions can be decreased by an amount making it necessary to start substantial corrections to respond to the rapid decrease of ground speed.

It is the object of the present invention to provide method for controlling a drive of a vehicle during a phase of acceleration and also during a phase of constant ground speed operation, the method allowing for controlling by software and making it possible to adjust automatically the number of revolutions of the engine and the ratio of the gear to the actual phases in which the vehicle is operating. The method must respond to sudden increment of load and keep the speed of the vehicle substantially constant within the predetermined limits of power.

The solution according to the present invention is to repeat a cycle of the following steps a), b) and c) during all phases of operation,

> a) determining any change in the torque % level of the driving engine (where torque % is equal to the actual torque of the engine at the actual speed divided by the maximum torque at the actual engine speed),
>
> b) calculating a theoretical engine speed in response to the change in torque % level and the actual speed of the engine caused by the change in torque % level, said theoretical engine speed being determined with the aid of a speed dependant performance parameter characteristic of the engine stored in the control unit which defines a desired operating range of said performance parameter, to bring the engine operation back into said desired operating range of the parameter, adjusting the engine speed to the theoretical speed , and
>
> c) calculating and adjusting the gear ratio of the change-speed gear dependant on the theoretical engine speed of step b) to maintain the desired ground speed of the vehicle,

the first step of the cycle being step a) or c) depending on the phase of operation of the vehicle.

The new torque % level of the engine due to the imposed load is determined in step a) from the speed of the engine [the maximum torque which the engine can supply at the speed being determined from a maximum torque/engine speed characteristic provided by the engine manufacturer] and the amount of fuel injected into the engine [which is proportional, for example, to the position of a control rod or the fuel injector] and which determines the actual torque of the engine.

Using the method of the present invention the drive of a vehicle may be controlled during both the phases of acceleration and constant ground speed in a manner so that the change of load during driving, for example an increase of load during driving an ascending slope, is recognized in time and an adjustment made to increase the number of revolutions of the engine.

The method involves repeating the cycle of steps a), b) and c), the first step of the cycle being dependent upon the actual driving phase. During an acceleration phase the cycle starts with the step c), followed by the steps a) and b). During a constant ground speed phase the cycle starts with the step a), followed by the steps b) and c).

The cycle of the steps is always the same both during the acceleration and constant ground speed driving phases. However, the first step of the cycle is different depending upon the driving phase involved. Consequently, the control of the drive reacts independent from the driving conditions in the necessary way to change of load. The generation of the necessary control software is easy due to the clear sequence of the program.

In a further embodiment of the method for controlling a drive of a vehicle when a desired ground speed has been achieved, the method is characterised by comprising executing said steps in the order a), b), c) and repeating said steps to maintain the engine in the desired operation range of the parameter with the vehicle working at the desired constant ground speed despite changes in engine load.

Modem electronic control units require only some milliseconds to conduct a step. Consequently, the whole cycle of the steps is conducted many times during a single second. A change in the torque % level of the engine according to step a) is determined practically without any delay in time.

According to step b) the change in the torque % level of step a) and the actual number of revolutions of the engine caused by the change in torque % level are used to calculate a theoretical number of revolutions of the engine with the aid of a speed dependant performance parameter characteristic of the engine stored in the control unit which defines a desired operating range of said performance parameter, to bring the engine operation back into said desired operating range of the parameter. In following the step c) a gear ratio is calculated in response to the number of revolutions of the engine and the desired ground speed of the vehicle. The change of the gear ratio is controlled accordingly. The speed dependent performance parameter characteristic of the engine designed in a manner to make the engine work in an optimum field of low fuel consumption.

The invention further includes a method for controlling the vehicle whilst in an acceleration phase prior to reaching the desired constant ground speed. The method being characterised by including steps of setting a predetermined level of acceleration and initiating the acceleration phase followed by repeating steps c), a), b) until the vehicle has accelerated to the desired ground speed, the gear ratio selected in step c) being dependent on the set level of predetermined acceleration.

The method of the present invention will now be described by way of example, in greater detail with respect to the following drawings in which:-

Fig. 1    shows a schematic view of a drive of a vehicle in which the method of the present invention is used;

Fig. 2    shows a schematic diagram of a cycle of method steps with the engine operating in a constant ground speed phase, and

Fig. 3    shows a schematic diagram of a cycle of method steps with the engine operating in an acceleration phase.

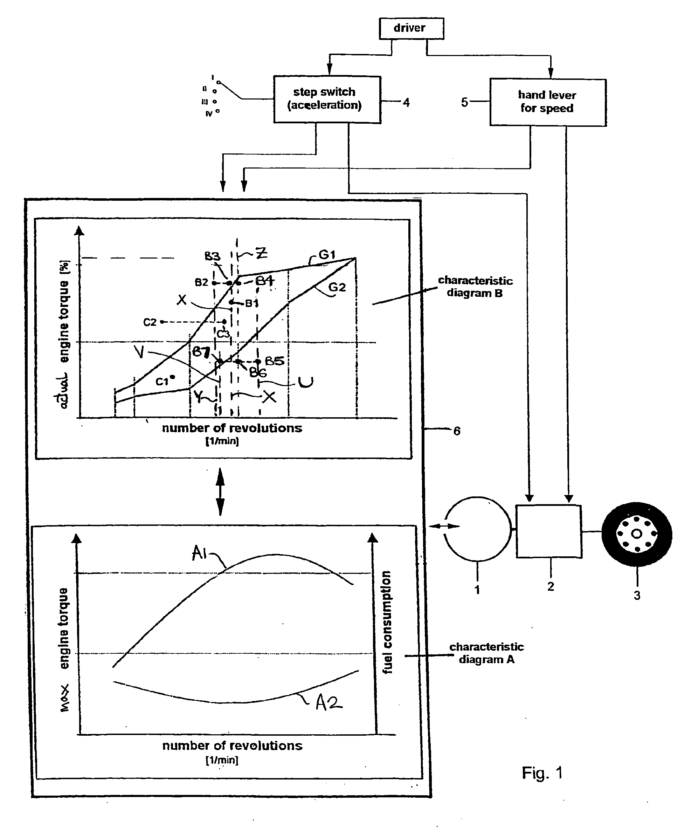

Referring to the drawings Fig. 1 shows a engine 1 of a vehicle such as a tractor, the engine 1 driving the driving wheels 3 vehicle via a infinitely change-speed gear 2. The engine 1 is a combustion motor supplied with fuel via an injection pump having a control rod (not shown). The gear 2 is a known hydrostatic-mechanical split power gear.

Two input means are provided in the cabin which are manually operable by the driver. One input means is directed to the theoretical acceleration of the vehicle. The other input means is directed to the desired ground speed of the vehicle. The first input means is a step switch 4 having four steps I, II, III and IV. The other input means is a throttle hand lever 5. Actuating the hand lever 5 into the forward end position initiates an acceleration phase, movement into the backward end position initiates a deceleration phase of operation. Different levels of acceleration are assigned to the steps I to IV of the step switch 4, these different levels being active for an acceleration phase initiated by lever 5. Both input means can be actuated by the driver before starting the drive and while driving also. During an acceleration phase the hand lever 5 has to be actuated and kept actuated until the desired theoretical ground speed of the vehicle is achieved. The ground speed of the vehicle achieved when the hand lever 5 is released is the desired ground speed. A control unit 6 is connected with the engine 1, its injection pump (not shown) and the gear 2 and received inputs from the step switch 4 and lever 5.

The control unit 6 has built into its software the characteristics A and B shown in Fig. 1.

Characteristic A has two curves, an upper curve A1 which is the usual torque/speed curve which shows the maximum torque which the engine can provide as a function of engine speed and a lower curve A2 which shows the fuel consumption of the engine as a function of engine speed when providing the maximum torque output of curve A1. Both these curves are provided by the engine manufacturer.

Characteristic B which is obtained experimentally defines between two boundary curves G1 and G2 a hysteresis area of engine operation in which the engine operates with acceptably low fuel consumption and acceptable engine power. Diagram B shows "torque %" as a function of engine speed where

$$\text{torque \%} = \frac{\text{actual torque at actual engine speed}}{\text{Maximum torque at actual engine speed}}$$

This diagram applies at least as far as middle and high engine power outputs are concerned.

Where the engine is operating above curve G1 or below G2 it is operating at high fuel consumption. For each torque % operating point above G1 or below curve G2 an operating point within curves G1 and G2 can be found (by adjusting the speed of the engine) where fuel consumption is acceptable low. The speed of the engine is adjusted by shifting the control rod of the engine injection pump. The actual operating point within the curves G1 and G2 depends on the load imposed on the engine and the actual engine speed. A control loop built into control unit 6 tries to maintain the operating point of the engine in the low fuel consumption and acceptable power area between curves G1 and G2.

The control unit 6 also adjusts the ratio of the gear 2 to keep the ground speed of the vehicle constant despite the change in speed of the engine necessary to bring the operating point of the engine within curves G1 and G2. This change in ratio of gear 2 results from the fact that the ground speed of the vehicle is proportional to the engine speed and the ratio of gear 2. The higher the engine speed the lower the necessary ratio and vice versa.

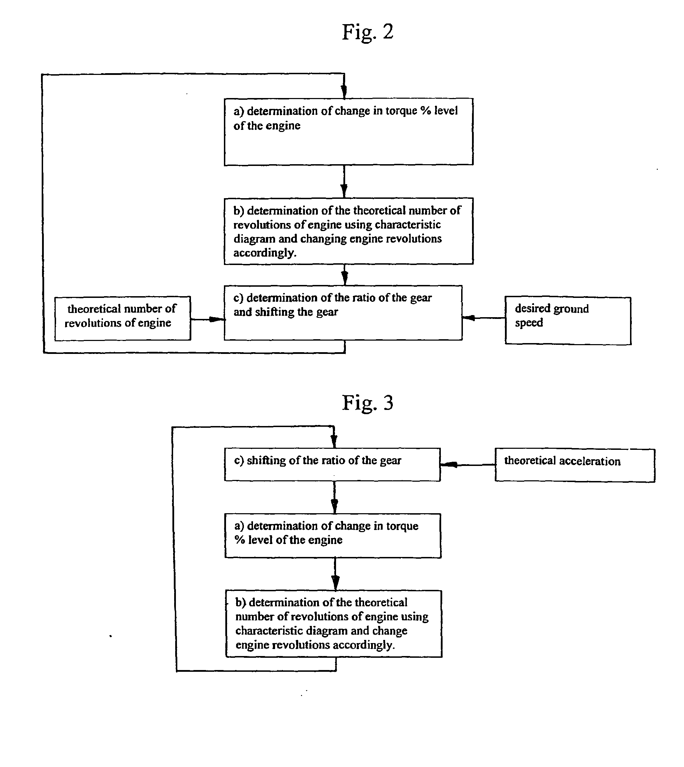

Considering the vehicle operating in a constant ground speed phase the control procedure indicated in Fig 2 is applied.

If the vehicle is operating in a constant ground speed phase at point B1 in characteristic B of Fig. 2 with an engine speed of X r.p.m. and is then subjected to an increase in load, as a result for example of climbing an ascending slope, the engine speed will reduce to say Y r.p.m. due to the increased load.

The control unit 6 is step a) of the control procedure determines the new torque % level of the engine due to the imposed load. This is determined from the speed of the engine [which determines the maximum torque which the engine can supply at the speed - (from characteristic A)] and the position of the control rod of the fuel injector which is proportional to the fuel injected and hence the actual torque of the engine.

Having established the new torque % level in step a) the control unit 6 then applies step b) of the control procedure during which the fuelling of the engine is increased by adjusting the position of the control rod of the engine injection pump to try to maintain the previous engine speed of X r.p.m. (and hence the desired ground speed) and also to increase the power output of the engine to match the increased load. Thus the torque % level increases to B2 and the engine speed rises from Y r.p.m. back towards X r.p.m. giving a new operating point B3.

The control loop which tries to maintain the operating point inside curves G1 and G2 checks whether point B3 is inside curves G1 and G2 and if not increases the engine to say the level Z to bring the operating point just inside curve G1 at say B4. In the final step c) of the control procedure the control unit 6 then adjusts the ratio of the gear 2 to match the engine speed Z and hence ensure that the desired ground speed of the tractor remains unchanged.

As will be appreciated all the above actions can be taken very quickly so that any necessary connective action in adjusting engine fuelling and gear ratio are made before any change in engine load can have a dramatic effect on engine output and vehicle ground speed.

Similarly if the vehicle is operating in a constant ground speed phase at point B4 at an engine speed of Z r.p.m. and a decrease in engine load occurs, for example because it begins to descend a slope, the speed of the engine increases to say U r.p.m. The control unit 6 decreases the fuelling of the engine by adjusting the position of the control rod of the engine injection pump to try to maintain the previous engine speed of Z r.p.m. (and hence the desired ground speed) and also to decrease the power output of the engine to match the decrease in load. If the decrease in load and hence torque% is high enough, the actual operating point of the vehicle may be outside the low fuel consumption area and below the curve G2 at, for example, point B5. The various control loops in control unit 6 recognise that point B5 is below curve G2 and reduce the engine speed back towards the previous speed of Z r.p.m. and reduce the torque % level to give an operating point of B6. the system recognises that point B6 is still below curve G2 and further reduces the engine speed of V r.p.m. to give and operating point B7 which is just within curves G1 and G2. The low fuel consumption operation is restored and the ratio of gear 2 is adjusted to the new engine speed of V r.p.m. to maintain the desired constant ground speed.

Operation of the vehicle during a phase of acceleration (Fig. 3) is as follows.

Phases of acceleration may occur from a vehicle ground speed of zero when the vehicle is starting from a standstill or from higher ground speeds during normal operation and are dealt with in the same manner. A phase of acceleration generally lasts some seconds, during which the hand lever 5 is kept actuated by the driver. The speed of the vehicle achieved when the hand lever is released is taken as the desired or theoretical ground speed of the vehicle.

With the lever 5 actuated by the driver to request an acceleration, as the first step c) of the control procedure the ratio of the gear 2 is increased by control unit 6. Contrary to the step c) when the vehicle is in a constant ground speed phase, the magnitude of the change in ratio of gear 2 in the acceleration mode is determined only by whether switch 4 is in position I, II, III or IV. The higher the level of the acceleration set on switch 4 the higher the ratio change used and the higher the torque % level change determined in the next step a) of the control procedure. This is determined using the procedure outlined above in which the engine speed determines the maximum torque which the engine can supply at that speed (determined from characteristic A) and the position of the control rod of the fuel injector indicates the fuel injected and hence the actual torque of the engine. As can be seen from the characteristic diagram B, the operating point C1 of the engine is shifted in the direction of the operating point C2 above the boundary curve G1 depending upon the reduction in engine speed and the increasing load on the engine. This occurs, as indicated above, in response to the preset theoretical acceleration step of the vehicle set by switch 4. The higher the preset acceleration step the higher the operating point C2 above the boundary curve G1. Consequently, the difference between the actual number of revolutions and the number of revolutions assigned to this operating point is higher. In step b) of the procedure, the control unit 6 then adjusts the vehicle speed to bring the operating point inside curve G1 and G2 to point C3. This cycle is repeated until the acceleration is complete and the desired ground speed is achieved.

## Claims

1. A method of controlling a drive of a vehicle during both an acceleration phase and a constant ground speed phase of operation, the drive including an engine controlled by an electronic control unit, the engine driving an infinitely variable change-speed gear, the method including setting a desired ground speed of the vehicle and being **characterised by** repeating a cycle of steps a), b) and c) in both phases of operation, said steps comprising:-

    a) determining any change in the torque % level of the engine;
    b) calculating a theoretical engine speed in response to the change in torque % level and the actual speed of the engine caused by the change in torque % level, said theoretical engine speed being determined with the aid of a speed dependant performance parameter characteristic of the engine stored in the control unit which defines a desired operating range of said performance parameter, to bring the engine operation back into said desired operating range of the parameter, adjusting the engine speed to the theoretical speed, and

c) calculating and adjusting the gear ratio of the change-speed gear dependant on the theoretical engine speed of step b) to maintain the desired ground speed of the vehicle,

the first step of the cycle being step a) or c) depending on the phase of operation of the vehicle.

**2.** A method according to Claim 1 for controlling the vehicle when a desired constant ground speed has been achieved, the method being **characterised by** comprising executing said steps in the order a), b), c) and repeating said steps to maintain the engine in the desired operation range of the parameter with the vehicle working at the desired constant ground speed despite changes in engine load.

**3.** A method according to Claim 1 for controlling the vehicle whilst in an acceleration phase, the method being **characterised by** including the steps of setting a predetermined level of acceleration and initiating the acceleration phase followed by repeating steps c), a), b) until the vehicle has accelerated to the desired ground speed, the gear ratio selected in step c) being dependent on the set level of predetermined acceleration.

**4.** A method according to Claims 1 to 3, the method being **characterised in that** for increments of load on the engine the performance characteristic of the engine stored in the control unit is defined by a boundary curve (G1) which increases the engine speed within maximum achievable power, and for decrements in load on the engine performance characteristic of the engine stored in the control units is defined by a further boundary curve (G2) which reduces engine speed, the boundary curves combining to define within them a field of low fuel consumption within which the engine can operate at the prevailing load level by adjustment of the engine speed.

**5.** A vehicle comprising an engine controlled by an electronic control unit, the engine driving an infmitely variable change-speed gear, the drive being **characterised by** being controlled by a method according to any one of claims 1 to 4.

Fig. 1

## Fig. 2

a) determination of change in torque % level of the engine

b) determination of the theoretical number of revolutions of engine using characteristic diagram and changing engine revolutions accordingly.

theoretical number of revolutions of engine → c) determination of the ratio of the gear and shifting the gear ← desired ground speed

## Fig. 3

c) shifting of the ratio of the gear ← theoretical acceleration

a) determination of change in torque % level of the engine

b) determination of the theoretical number of revolutions of engine using characteristic diagram and change engine revolutions accordingly.

# EP 1 447 260 A1

**European Patent Office**

## EUROPEAN SEARCH REPORT

Application Number

EP 04 00 2723

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 866 622 A (DREHER GUNTHER ET AL) 12 September 1989 (1989-09-12) * column 4, line 46 - column 7, line 22 * * column 8, line 1 - column 8, line 36; figures 1,3 * | 1-3,5 | B60K41/12 B60K31/04 F16H61/46 F16H47/02 |
| Y | | 4 | |
| X | EP 0 375 625 A (AMMANN DUOMAT VERDICHTUNG AG) 27 June 1990 (1990-06-27) * column 3, line 31 - column 4, line 14 * * column 7, line 14 - column 9, line 38; figure 2 * | 1,2,4,5 | |
| Y | | 4 | |
| X | EP 0 280 757 A (MEYERLE MICHAEL) 7 September 1988 (1988-09-07) * column 5, line 55 - column 8, line 35 * | 1-3,5 | |
| X | DE 197 01 320 A (AUTO POLLY GMBH) 24 July 1997 (1997-07-24) * column 2, line 15 - column 3, line 57 * * column 5, line 5 - column 5, line 36; figure 2 * | 1-3,5 | TECHNICAL FIELDS SEARCHED (Int.Cl.7) B60K F16H |
| A | US 5 575 737 A (WEISS HEINZ) 19 November 1996 (1996-11-19) * abstract; figure 2 * | 1-5 | |
| A | US 2001/056320 A1 (FUJII TAKEHITO ET AL) 27 December 2001 (2001-12-27) * abstract; figure 5 * | 1-5 | |

The present search report has been drawn up for all claims

| Place of search | Date of completion of the search | Examiner |
|---|---|---|
| Munich | 25 May 2004 | Marx, W |

**ANNEX TO THE EUROPEAN SEARCH REPORT
ON EUROPEAN PATENT APPLICATION NO.**

EP 04 00 2723

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2004

| Patent document cited in search report | | Publication date | Patent family member(s) | | Publication date |
|---|---|---|---|---|---|
| US 4866622 | A | 12-09-1989 | DE | 3526671 A1 | 29-01-1987 |
| | | | DE | 3664599 D1 | 31-08-1989 |
| | | | EP | 0210404 A1 | 04-02-1987 |
| | | | JP | 62026344 A | 04-02-1987 |
| EP 0375625 | A | 27-06-1990 | CH | 678880 A5 | 15-11-1991 |
| | | | EP | 0375625 A1 | 27-06-1990 |
| EP 0280757 | A | 07-09-1988 | EP | 0280757 A1 | 07-09-1988 |
| | | | DE | 3542624 A1 | 04-06-1987 |
| | | | EP | 0728612 A2 | 28-08-1996 |
| DE 19701320 | A | 24-07-1997 | DE | 19701320 A1 | 24-07-1997 |
| US 5575737 | A | 19-11-1996 | DE | 4430447 A1 | 29-02-1996 |
| | | | AT | 160119 T | 15-11-1997 |
| | | | CA | 2156773 A1 | 28-02-1996 |
| | | | DE | 59500975 D1 | 18-12-1997 |
| | | | EP | 0698518 A1 | 28-02-1996 |
| | | | FI | 953944 A | 28-02-1996 |
| US 2001056320 | A1 | 27-12-2001 | JP | 2002005277 A | 09-01-2002 |
| | | | DE | 10129930 A1 | 03-01-2002 |
| | | | GB | 2364107 A | 16-01-2002 |

EPO FORM P0459

For more details about this annex : see Official Journal of the European Patent Office, No. 12/82